# EUROPEAN PATENT APPLICATION

(11) **EP 4 482 181 A1**
(43) Date of publication of application: **25.12.2024**
(21) Application number: 22925447.9
(22) Date of filing: 14.02.2022
(51) Int. Cl.: H04W 4/12, H04W 76/27, H04L 41/0894

(54) **SYSTEM INFORMATION TRANSMISSION METHOD, COMMUNICATION APPARATUS, AND COMMUNICATION DEVICE**

(71) Applicant: Beijing Xiaomi Mobile Software Co., Ltd., Beijing 100085 (CN)
(72) Inventor: LI, Yanhua, Beijing 100085 (CN); WU, Yumin, Beijing 100085 (CN)
(74) Representative: Stöckeler, Ferdinand
(86) International application number: PCT/CN2022/076229
(87) International publication number: WO 2023/151085

(57) **Abstract**

Provided in the embodiments of the present disclosure are a system information transmission method, a communication apparatus, and a communication device. A data transmission method may comprise: a network device dividing target system information into a plurality of segments; and sending the plurality of segments to a terminal device. In this way, the transmission reliability of system information is improved.

## Description

### TECHNICAL FIELD

The disclosure relates to the field of wireless communication technologies, and in particularly to methods for transmitting system information, communication apparatuses, and communication devices.

### BACKGROUND

In a power-saving project of a 3rd generation partnership project (3GPP), it is proposed to use a tracking/channel state information reference signal (TRS/CSI-RS) to assist in obtaining a time-frequency domain synchronization with a network when a terminal device is in an idle state. Compared to a synchronization signal and physical broadcast channel block (SSB), the TRS/CSI-RS may be configured to be closer to a physical random access channel occasion (PO), which may shorten a wake-up time and reduce a power consumption.

At present, in a new radio (NR) network, configuration information of the TRS/CSI-RS may be carried in a system information block (SIB) for transmission. Therefore, how to transmit the SIB has become an urgent problem to be solved.

### SUMMARY

The disclosure provides methods for transmitting system information, communication apparatuses, and communication devices, to transmit a system information block (SIB) in segments.

According to a first aspect of the disclosure, a method for transmitting system information is provided, including: dividing, by a network device, target system information into a plurality of segments; and sending, by the network device, the plurality of segments to a terminal device.

In some embodiments, the target system information includes configuration information of a tracking/channel state information reference signal (TRS/CSI-RS).

In some embodiments, sending, by the network device, the plurality of segments to the terminal device includes: carrying, by the network device, the plurality of segments in system information blocks (SIBs) or SIB-segments for sending, in which one segment corresponds to one SIB or one SIB-segment.

In some embodiments, carrying, by the network device, the plurality of segments in the SIBs or the SIB-segments for sending includes: sending sequentially, by the network device, the plurality of segments in an order of SIBs or SIB-segments.

In some embodiments, the method further includes: sending, by the network device, segment indication information to the terminal device, in which the segment indication information is configured to indicate segment information of the target system information.

In some embodiments, the method further includes: indicating, by the network device, a segment combination manner of the target system information to the terminal device, in which the segment combination manner includes a manner of combining all segments to form the target system information or a manner of combining a part of segments to form the target system information.

In some embodiments, the method further includes: sending, by the network device, scheduling information of a plurality of SIBs or SIB-segments to the terminal device; in which the plurality of SIBs or SIB-segments carry the plurality of segments, and the scheduling information is used for instructing the terminal device to combine the plurality of segments to form the target system information.

In some embodiments, the method further includes: indicating, by the network device, a first duration to the terminal device, in which the first duration is an available duration for the terminal device to receive the segments of the target system information.

In some embodiments, the method further includes: configuring, by the network device, at least one value tag of at least one SIB for the terminal device, in which the at least one value tag is used for instructing the terminal device to update the at least one SIB.

In some embodiments, in response to the network device configuring value tags of the plurality of SIBs for the terminal device, the value tags of the plurality of SIBs are the same.

According to a second aspect of the disclosure, a method for transmitting system information is provided, including: obtaining, by a terminal device, at least one segment from a network device, in which the at least one segment is associated with target system information; and obtaining, by the terminal device, the target system information based on the at least one segment.

In some embodiments, the target system information includes configuration information of a tracking/channel state information reference signal (TRS/CSI-RS).

In some embodiments, obtaining, by the terminal device, the at least one segment from the network device includes: receiving, by the terminal device, the at least one segment carried in system information block(s) (SIB) or SIB-segment(s).

In some embodiments, an order of the at least one segment is consistent with an order of at least one SIB or SIB-segment.

In some embodiments, the method further includes: receiving, by the terminal device, segment indication information from the network device, in which the segment indication information is configured to indicate segment information of the target system information.

In some embodiments, the method further includes: receiving, by the terminal device, scheduling information of a plurality of SIBs or SIB-segments from the network device; and combining, by the terminal device, the segments carried by the plurality of SIBs or SIB-segments to form the target system information.

In some embodiments, the method further includes: determining, by the terminal device, a segment combination manner of the target system information, in which the segment combination manner includes a manner of combining all segments to form the target system information or a manner of combining a part of segments to form the target system information.

In some embodiments, in response to the terminal device determining to adopt the manner of combining all segments to form the target system information, the method further includes: determining, by the terminal device, that a current segment is a last one of segments of the target system information; and obtaining, by the terminal device, the target system information based on the at least one segment includes: combining, by the terminal device, the at least one segment to form the target system information.

In some embodiments, the method further includes: determining, by the terminal device, that the current segment is not the last one of segments of the target system information; and saving, by the terminal device, the current segment and waiting to receive a next segment.

In some embodiments, in response to the terminal device determining to adopt the manner of combining all segments to form the target system information, obtaining, by the terminal device, the target system information based on the at least one segment includes: receiving, by the terminal device, the at least one segment within a first duration, in which the first duration is an available duration for the terminal device to receive the segment(s) of the target system information; and determining, by the terminal device when the first duration expires, that the at least one segment is all segments of the target system information, and combining the at least one segment to form the target system information.

In some embodiments, the method further includes: determining, by the terminal device when the first duration expires, that the at least one segment is not all segments of the target system information, and discarding the at least one segment.

In some embodiments, in response to the terminal device determining to adopt the manner of combining a part of segments to form the target system information, obtaining, by the terminal device, the target system information based on the at least one segment includes: receiving, by the terminal device, the at least one segment within a first duration, in which the first duration is an available duration for the terminal device to receive the segment(s) of the target system information; and when the first duration expires, combining, by the terminal device, the at least one segment to form the target system information.

According to a third aspect of the disclosure, a communication apparatus is provided. The communication apparatus may be a network device in a communication system or a chip or on-chip system in a network device, or the communication apparatus may be a functional module, in a network device, for implementing the method of above embodiments. The communication apparatus may achieve functions performed by the network device in above embodiments, and these functions may be implemented in a manner that a hardware executes a corresponding software. These hardware or software include one or more modules corresponding to the above functions. The communication apparatus includes: a first processing module configured to divide target system information into a plurality of segments; and a first transmission module configured to send the plurality of segments to a terminal device.

In some embodiments, the target system information includes configuration information of a tracking/channel state information reference signal (TRS/CSI-RS).

In some embodiments, the first transmission module is configured to carry the plurality of segments in system information blocks (SIBs) or SIB-segments for sending, in which one segment corresponds to one SIB or one SIB-segment.

In some embodiments, the first transmission module is configured to sequentially send the plurality of segments in an order of SIBs or SIB-segments.

In some embodiments, the first transmission module is further configured to send segment indication information to the terminal device, in which the segment indication information is configured to indicate segment information of the target system information.

In some embodiments, the first transmission module is further configured to indicate a segment combination manner of the target system information to the terminal device, in which the segment combination manner includes a manner of combining all segments to form the target system information or a manner of combining a part of segments to form the target system information.

In some embodiments, the first transmission module is further configured to send scheduling information of the plurality of SIBs or SIB-segments to the terminal device; in which the plurality of SIBs or SIB-segments carry the plurality of segments, and the scheduling information is used for instructing the terminal device to combine the plurality of segments to form the target system information.

In some embodiments, the first transmission module is further configured to indicate a first duration to the terminal device, in which the first duration is an available duration for the terminal device to receive the segment(s) of the target system information.

In some embodiments, the first processing module is further configured to configure at least one value tag of the at least one SIB for the terminal device, in which the at least one value tag is used for instructing the terminal device to update the at least one SIB.

In some embodiments, in response to the network device configuring value tags of a plurality of SIBs for the terminal device, the value tags of the plurality of SIBs are the same.

According to a fourth aspect of the disclosure, a communication device is provided. The communication apparatus may be a terminal device in a communication system or a chip or on-chip system in a terminal device, or the communication device may be a functional module, in a terminal device, for implementing the method of above embodiments. The communication device may achieve functions executed by the terminal device in above embodiments, and these functions may be implemented in a manner that a hardware executes a corresponding software. These hardware or software include one or more modules corresponding to the above functions. The communication apparatus includes: a second transmission module configured to obtain at least one segment from a network device, in which at least one segment is associated with target system information; and a second processing module configured to obtain the target system information based on the at least one segment.

In some embodiments, the target system information includes configuration information of a tracking/channel state information reference signal (TRS/CSI-RS).

In some embodiments, the second transmission module is configured to receive at least one segment carried in system information block(s) (SIB) or SIB-segment(s).

In some embodiments, an order of the at least one segment is consistent with an order of at least one SIB or SIB-segment.

In some embodiments, the second transmission module is further configured to receive segment indication information from the network device, in which the segment indication information is configured to indicate segment information of the target system information.

In some embodiments, the second transmission module is further configured to receive scheduling information of a plurality of SIBs or SIB-segments from the network device, in response to a plurality of segments being carried in the SIBs; and the second processing module is further configured to combine the segments carried by the plurality of SIBs or SIB-segments to form the target system information.

In some embodiments, the second processing module is further configured to determine a segment combination manner of the target system information, in which the segment combination manner includes a manner of combining all segments to form the target system information or a manner of combining a part of segments to form the target system information.

In some embodiments, the second processing module is further configured to, in response to the second processing module determining to adopt the manner of combining all segments to form the target system information, determine that a current segment is a last one of segments of the target system information and combine the at least one segment to form the target system information.

In some embodiments, the second processing module is further configured to determine that the current segment is not the last one of segments of the target system information; save the current segment and wait to receive a next segment.

In some embodiments, the second processing module is further configured to, in response to the second processing module determining to adopt the manner of combining all segments to form the target system information, receive the at least one segment within a first duration, in which the first duration is an available duration for the terminal device to receive the segment(s) of the target system information; determine, when the first duration expires, that the at least one segment is all segments of the target system information, and combine the at least one segment to form the target system information.

In some embodiments, the second processing module is further configured to determine, when the first duration expires, that the at least one segment is not all segments of the target system information and discard the at least one segment.

In some embodiments, the second transmission module is further configured to receive, in response to the second processing module determining to adopt the manner of combining a part of segments to form the target system information, at least one segment within a first duration, in which the first duration is an available duration for the terminal device to receive the segment(s) of the target system information; and combine, when the first duration expires, the at least one segment to form the target system information.

According to a fifth aspect of the disclosure, a communication device is provided, such as a network device, including: an antenna; a memory; and a processor connected to the antenna and the memory respectively and configured to execute computer executable instructions stored on the memory to control a transmission and a reception of the antenna, and being able to perform the method for transmitting system information according to any one of the embodiments in the first aspect of the disclosure and possible embodiments thereof.

According to a sixth aspect of the disclosure, a communication device is provided, such as a terminal device, including: an antenna; a memory; and a processor connected to the antenna and the memory respectively and configured to execute computer executable instructions stored on the memory to control a transmission and a reception of the antenna, and being able to perform the method for transmitting system information according to any one of the embodiments in the second aspect of the disclosure and possible embodiments thereof.

According to a seventh aspect of the disclosure, a computer storage medium is provided. The computer storage medium has computer executable instructions stored therein. The computer executable instructions, when executed by a processor, may perform the method for transmitting system information according to any one of the embodiments in the first aspect, the second aspect of the disclosure and possible embodiments thereof.

In the disclosure, by transmitting the target system information in segments, it avoids that the target system information cannot be carried in one SIB for transmission due to an excessive amount of data, thereby improving the transmission reliability of the target system information.

It is understandable that the third to seventh aspects of the disclosure are consistent with the technical solutions of the first to second aspects of the disclosure, and beneficial effects achieved by each aspect and corresponding feasible implementation are similar, which will not be repeated.

### BRIEF DESCRIPTION OF THE DRAWINGS

FIG. 1 is a schematic diagram illustrating a communication system according to embodiments of the disclosure.
FIG. 2 is a flowchart illustrating a method for transmitting system information performed by a network device side according to embodiments of the disclosure.
FIG. 3 is a flowchart illustrating a method for transmitting system information performed by a terminal device side according to embodiments of the disclosure.
FIG. 4 is a schematic diagram illustrating a communication apparatus according to embodiments of the disclosure.
FIG. 5 is a schematic diagram illustrating another communication apparatus according to embodiments of the disclosure.
FIG. 6 is a schematic diagram illustrating a communication apparatus according to embodiments of the disclosure.
FIG. 7 is a schematic diagram illustrating a terminal device according to embodiments of the disclosure.
FIG. 8 is a schematic diagram illustrating a network device according to embodiments of the disclosure.

### DETAILED DESCRIPTION

Embodiments of the disclosure will be described in detail below, and examples of embodiments are shown in accompanying drawings. In the description with reference to the drawings, unless otherwise indicated, the same numbers in different drawings indicate the same or similar elements. Embodiments described below do not represent all possible embodiments consistent with the disclosure. Instead, they are only examples of devices and methods consistent with some aspects of the disclosure as detailed in the attached claims.

Terms used in embodiments of the disclosure are solely for a purpose of describing specific embodiments and are not intended to limit embodiments of the disclosure. The singular forms "a/an" and "the" used in embodiments of the disclosure and attached claims are also intended to include plural forms, unless clearly indicated otherwise in the context. It is understandable that the term "and/or" used in the disclosure refers to and includes any or all possible combinations of one or more related listed items.

It is understandable that although various information may be described using terms such as first, second, third, etc. in embodiments of the disclosure, such information should not be limited to these terms. These terms are only used to distinguish information of the same type from each other. For example, without departing from the scope of embodiments of the disclosure, first information may also be referred to as second information, and similarly, second information may also be referred to as first information. Depending on the context, words "if" and "as if" used here may be interpreted as "when" or "while" or "in response to determining".

A technical solution according to embodiments of the disclosure may be applied to a wireless communication between communication devices. The wireless communication between the communication devices may include: a wireless communication between a network device and a terminal device, a wireless communication between network devices, and a wireless communication between terminal devices. In embodiments of the disclosure, a term "wireless communication" may further be abbreviated as "communication", and a term "communication" may further be described as "data transmission", "information transmission", or "transmission".

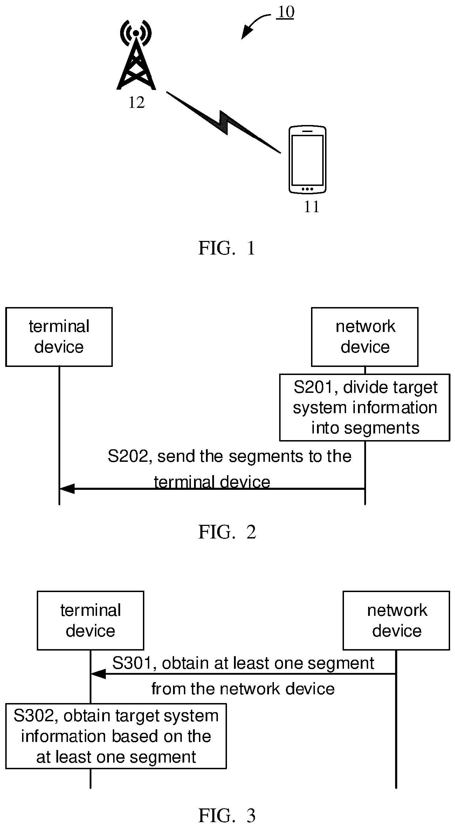

Embodiments of the disclosure provide a communication system. The communication system may be a communication system using a cellular mobile communication technology. FIG. 1 is a schematic diagram illustrating a communication system according to embodiments of the disclosure. As illustrated in FIG. 1, a communication system 10 may include: a terminal device 11 and a network device 12.

In one embodiment, the terminal device 11 may be a device that provides a voice or data connectivity to a user. In some embodiments, the terminal device may further be referred to as a user equipment (UE), a mobile station, a subscriber unit, a station, or a terminal equipment (TE), etc. The terminal device may include a cellular phone, a personal digital assistant (PDA), a modem, a handheld, a laptop computer, a cordless phone, a wireless local loop (WLL) station, or a pad. With a development of the wireless communication technology, the device accessing the communication system that may communicate with a network side of the communication system or communicate with other devices through the communication system is the terminal device in embodiments of the disclosure. For example, a terminal and a vehicle in an intelligent transportation, a household device in an intelligent home, a power meter reading instrument in an intelligent grid, a voltage monitoring instrument, an environmental monitoring instrument, a video surveillance instrument in an intelligent complete network, a payment machine, etc. In embodiments of the disclosure, the terminal device may communicate with the network device, and a plurality of terminal devices may also communicate with each other. The terminal device may be statically fixed or mobile.

In embodiments of the disclosure, the above mobile device 101 may be a terminal device with normal functions, or a terminal with a limited capability, such as a NR light terminal device, a Reduced Capability (RedCap) terminal device, an enhanced reduced capability terminal device, or others.

It is noteworthy that in the 4G system, in order to support an Internet of Things service, two major technologies have been proposed: a machine type communication (MTC) and a narrow band internet of thing (NB-IoT). These two technologies are mainly targeted at low-rate, high- latency scenarios, such as meter reading, environmental monitoring and other scenarios. Currently, The NB-IoT may only support a maximum rate up to a few hundred kbps (kilobits per second), while the MTC may only support a maximum rate up to a few Mbps (megabits per second). But with the continuous development of the Internet of Things service, such as a video surveillance, an intelligent home, a wearable device, and an industrial sensor monitoring, these services typically require a rate of tens to hundreds of Mbps, while also having a relatively high requirement for delay. Therefore, the MTC technology and the NB-IoT technology in a 4G system are difficult to meet the requirements. Adopting this situation, a new terminal device has been proposed to be designed in a 5GNR to meet the requirements of the above services. In a current 3rd generation partnership project (3GPP) standardization, this new type of terminal device is referred to as a reduced capability UE (i.e. RedCap UE). Due to a fact that RedCap technology is mainly targeted at a medium speed application, a maximum bandwidth of the RedCap UE in a FR1 frequency band of 5G is 20MHz. In a new version of the 3GPP standardization, an applicable bandwidth for the RedCap has been further reduced to 5MHz. At this point, the terminal device may be referred to as an enhance reduced capability UE (i.e. eEdCap UE).

The above network device 12 may be a device, in an access network side, configured to support the terminal to access the communication system. For example, the network device 12 may be an evolved NodeB (eNB) in a 4G access technology communication system, a next generation nodeB (gNB) in a 5G access technology communication system, a transmission reception point (TRP), a relay node, or an access point (AP), etc.

In an NR technology, a special reference symbol, also known as tracking/channel state information-reference signal (TRS/CSI-RS or TRS) (in the disclosure, the TRS is an abbreviation of the TRS/CSI-RS), is introduced. Based on the TRS, the terminal device may perform time and frequency synchronization. For the terminal device in a non-connected state (such as an idle state or a deactivated state), the terminal device may also wake up to receive the TRS on demand and perform the time-frequency synchronization based on the TRS. With an assistance of the TRS, the terminal device may reduce a number of receptions of the SSB signals during the time-frequency synchronization, thereby shortening a wake-up time and reducing the power consumption.

Further, in combination with the above communication system, the network device carries system information in different system messages and sends the system messages through broadcasting. The system message may include: a master information block (MIB) and a system information block (SIB). The SIB is classified as a SIB1 and other SIBs (also known as SIBx, where x is a positive integer greater than or equal to 2). Other SIBs may include: a SIB2, a SIB3, a SIB4, or others. The MIB carries the system information that is most necessary for the terminal device to access a cell. For example, the MIB includes information such as a system frame number and/or a subcarrier spacing. The SIB1 carries the system information such as scheduling information of the other SIBs, access control information, and cell selection information. The other SIBs carry the system information required for other functions, such as configuration information of a TRS/CSI-RS, a cell reselection, a location, an emergency notification, and a sidelink (SL). The terminal device needs to continuously obtain the MIB and the SIB1. For the other SIBs, the terminal device may select and read the system information based on its own needs (on demand). Here, the term "carry" may also be described as "bear".

In a practical application, the system information (such as the configuration information of the TRS) may be carried in other SIBs (i.e. SIBX) for transmission. Assuming that each TRS resource set is 65-bit or 95-bit, the number of bits of the whole TRS resource set (i.e., an amount of data in the TRS resource set) is 65 × 64=4160 bits or 95 × 64=6080 bits. The amount of data of information that one SIB may carry is about 2800 bits. It may be seen that the number of bits of the TRS resource set is much larger than the number of bits that one SIB may bear. In this situation, how to achieve the transmission of the system information is an urgent problem to be solved.

To address the above problem, embodiments of the disclosure provide a method for transmitting system information, which may be performed by the network device of the above communication system.

FIG. 2 is a flowchart illustrating a method for transmitting system information performed by a network device side according to embodiments of the disclosure. As illustrated in FIG. 2, the method may include the following.

At S201, a network device divides target system information into a plurality of segments.

Here, the target system information may include configuration information of a tracking reference signal (TRS), configuration information of a channel state information reference signal (CSI-RS), or the like. The target system information may also include other system information, which is not specifically limited in embodiments of the disclosure.

For example, the configuration information of the TRS and the configuration information of the CSI-RS may include, but are not limited to, indication information for a pattern of sending a TRS, indication information for a pattern of sending a CSI-RS, or resource information of sending resource(s). The pattern above may be a pattern of frequency domain resource(s) and/or a pattern of time domain resource(s), and the sending resource(s) above may include frequency domain resource(s), time domain resource(s), beam resource(s), or the like.

It is understandable that the network device may determine, based on the amount of data of the target system information (i.e. the number of bits of the target system information) and the amount of data that the system message may carry, whether to divide the target system information segments for transmission, determine the number of segments to be divided, and determine the amount of data of each segment. For example, if the number of bits of the target system information is 4160 bits and a maximum number of bits carried by one system message is 2800 bits, then the network device may determine to divide the target system information into 2 segments for transmission, where the number of bits of one segment is 2800 and the number of bits of the other segment is 1360. Or, in a 3GPP protocol, it is also possible to predetermine the number of segments to be divided for the target system information and the amount of data of the system message that carries each segment. The network device may determine the amount of data of each segment of the target system information based on the number of segments and the amount of data of corresponding each segment specified in the protocol. For example, the protocol specifies that the target system message is divided into two segments for transmission, and these two segments are carried in SIB21 (2800 bits) and SIB22 (2800 bits) respectively. Therefore, the network devices may divide the target system information into one segment with the number of bits being 2800 bits and another segment with the number of bits being 1360 bits. Certainly, the network device may also use other methods to divide the target system information into segments, which is not specifically limited in embodiments of the disclosure.

At S202, the network device sends the plurality of segments to a terminal device.

It is understandable that the plurality of segments of the target system information are carried, by the network device, in the system messages for transmission. After receiving all or part of the plurality of segments, the terminal device may obtain the target system information based on the at least one received segment.

In some embodiments, the system message may be an SIB or an SIB-segment. The plurality of segments may be carried, by the network device, in different SIBs or different SIB-segments for sending. One segment is carried in one SIB or one SIB-segment. For example, different segments may be carried in different SIBs, such as SIB-X, SIB-Y, SIB-Z, SIB-21, SIB-22, SIB23, or the like. Or, different segments may be carried in different SIB-segments, such as SIB-segmentX, SIB-segmentY, SIB-segmentZ, or the like. Here, X, Y, Z, 21, 22, and 23 are serial numbers of SIBs or SIB-segments.

It is noteworthy that the SIB-segment is a segment of the SIB. That is, at a sending position of the SIB, different groups or segments of the same SIB are sent multiple times, and the terminal device, after receiving a plurality of groups or segments, combines them to form a complete SIB.

In some embodiments, an order of the plurality of segments of the target system information is consistent with an order of SIBs or SIB-segments. The network device may send the plurality of segments sequentially in the order of SIBs or SIB-segments. For example, the target system information is divided into a segment 1, a segment 2, and a segment 3. The network device may send the segment 1, the segment 2, and the segment 3 sequentially in the order of SIB-21, SIB-22, and SIB23; or the network devices may send the segment 1, the segment 2, and the segment 3 sequentially in the order of SIB-X, SIB-Y, and SIB-Z (X<Y<Z).

In some embodiments, before the S202, the above method may further include: sending, by the network device, segment indication information to the terminal device, in which the segment indication information is configured to indicate segment information of the target system information.

Here, the segment information of the target system information may include segment numbers and segment types of the plurality of segments. The segment number is used to indicate which segment of the target system information the current segment is, and the segment type is used to indicate whether a current segment is a last one of segments of the target system information. A value of the segment number may be an integer such as 0, 1, 2, 3, ... and a value of the segment type may be 0 or 1.

For example, the segment number (segmentNumber) and the segment type (segmentType) may be represented as follows:

| | |
|---|---|
| segmentNumber-r17 | INTEGER (0..1), |
| segmentType-r17 | ENUMERATED {notLastSegment, lastSegment}. |

If the segment information of the current segment is (0, 0), it means that the current segment is a first one of segments of the target system information but not the last one. If the segment information of the current segment is (0, 1), it means that the current segment is the first one of segments of the target system information and is the last one. If the segment information of the current segment is (1, 1), it means that the current segment is a second one of segments of the target system information and is the last one. Here, a codepoint (1, 0) may be reserved and not be used. Certainly, the above segment number and the segment type may also be coded jointly. For example, a codepoint 00 means the first one but not the last one. A codepoint 01 means the first one and the last one. A codepoint 11 means that the second one is the last one.

Further, if the segment information of the current segment received by the terminal device is (0, 0), the terminal device first saves the current segment and continues to wait for receiving a next segment. If the segment information of the current segment received by the terminal device is (0, 1), the terminal device first saves the current segment and obtains the target system information based on the current segment. If the current segment information received by the terminal device is (1, 1), the terminal device determines whether a previous segment (i.e. segment 0) has been received, and if the previous segment has been received, the target system information is obtained based on the previous segment and the current segment.

In some embodiments, the network device may configure a segment combination manner of the target system information for the terminal device, to enable the terminal device to obtain the target system information based on different segment combination manners. Therefore, before the S202, the above method also includes: indicating, by the network device, a segment combination manner of the target system information to the terminal device.

The segment combination manner includes a manner of combining all segments to form the target system information or a manner of combining a part of segments to form the target system information.

In some embodiments, the network device may indicate the segment combination manner to the terminal device, so that the terminal device may determine, based on the segment combination manner, whether there is a need to receive all segments of the target system information.

In an embodiment, the network device may indicate the segment combination manner of the target system information to the terminal device by sending indication information. For example, the network device may carry the indication information in the MIB or the SIB 1, or the network device may carry the indication information in feedback information for responding to an SIB request sent by the terminal device. Certainly, the network device may also carry the indication information in other higher layer signaling (such as a Radio Resource Control (RRC) signaling), which is not specifically limited in embodiments of the disclosure. Or, the SIB request message sent by the terminal device is carried in an Msg1, and the feedback information sent by the network device is carried in an Msg2.

In other embodiments, the network device may instruct the terminal device to combine the segments carried by the SIBs or the SIB-segments (i.e. all segments of the target system information) to form the target system information by sending scheduling information of all SIBs or SIB-segments related to the target system information.

It is understandable that the network device sends the scheduling information of the plurality of SIBs or SIB-segments to the terminal device, where the scheduling information of the plurality of SIBs or SIB-segments refers to the scheduling information of all SIBs or SIB-segments related to the target system information. That is to say, for the SIBs or SIB-segments that the network device sends the scheduling information to the terminal device, the terminal device needs to collect all these SIBs or SIB-segments and combine the segments carried in these SIBs or the SIB-segments to form the target system information. From this, it may be seen that the scheduling information of the plurality of SIBs or SIB-segments may not only indicate that the segment combination manner is a manner of combining all segments to form the target system information, but also indicate the segment information (such as the segment number, the segment type) of the target system information.

In an embodiment, all segments of the target system information are carried by different SIBs (such as SIB-X, SIB-Y, SIB-Z, etc.). If the network device issues the scheduling information of all SIBs related to the target system information, it implicitly expresses that the terminal device must receive these SIBs, which means all segments are combined to form the target system information. Therefore, after receiving all segments, the terminal device combines all segments together for use.

For example, it is assumed that the configuration information of the TRS is carried separately in two SIBs (such as SIB-X and SIB-Y). If the network device issues the scheduling information of the SIB-X and the SIB-Y, it means that the manner of combining all segments to form the target system information is adopted. Then, the terminal device knows that it needs to receive the SIB-X and the SIB-Y (at this time, there are many contents of the TRS issued by the network device, and the configuration information of the TRS is transmitted in segments), and may combine the SIB-X and the SIB-Y together for use.

For example, it is assumed that the configuration information of the TRS is only carried in one SIB. If the network device only issues the scheduling information of the SIB-X, then the terminal device knows that it only needs to receive the SIB-X (at this time, there are fewer contents of the TRS issued by the network device, and the configuration information of the TRS may be carried in one SIB for transmission).

Certainly, the network device and the terminal device may also determine the segment combination manner of the target system information based on a protocol provision of the 3GPP, which is not limited in embodiments of the disclosure.

In some embodiments, the network device may also configure a time window (i.e., a first duration) for the terminal device to receive the segment(s) of the target system information. The first duration may also be described as an available duration for the terminal device to receive the segment(s) of the target system information. Correspondingly, the above method may also include: indicating, by the network device, a first duration to the terminal device, such as several milliseconds (ms).

It is understandable that in an embodiment, the network device may send the first duration to the terminal device. For example, the network device may carry the first duration in the MIB or the SIB 1, or the network device may carry the first duration in the feedback information for responding to the SIB request sent by the terminal device. Certainly, the network device may also carry the first duration in other higher layer signaling (such as the RRC signaling), which is not specifically limited in embodiments of the disclosure. In another embodiment, the network device and the terminal device may determine the first duration based on the protocol provision of the 3GPP.

In some embodiments, in a case where the network device carries the segment(s) of the target system information in the SIB(s) for sending, when an SIB carrying the segment of the target system information changes, the network device may send an SIB change notification (such as a short message) to the terminal device to notify the terminal device that the SIB has changed. After receiving the SIB change notification, the terminal device may read and obtain an updated SIB. Therefore, the above method may further include: configuring, by the network device, at least one value tag of at least one SIB for the terminal device, in which the at least one value tag is configured to indicate the terminal device to update the at least one SIB.

In a practical application, the network device may configure a plurality of value tags of the SIBs for the terminal device, in which these value tags may be the same. At this point, the terminal device may update a plurality of SIBs simultaneously. This means that the network device updates the plurality of SIBs synchronously, and the terminal will be informed of the changes in the value tags of all SIBs and perform a synchronous update for the plurality of SIBs. Or, the network device may separately configure one or more value tags of the SIB(s) for the terminal device. At this point, the terminal device may individually update a certain SIB or several SIBs, which has benefits that the terminal device does not need to update the SIBs that have not changed and thus the decoding overheat is reduced. Certainly, the network device may also configure the value tag of the SIB in other ways, and embodiments of the disclosure do not specifically limit this.

For example, although the update to one SIB does not cause a change to any another SIB, a validity of resources in other SIBs may continue to be used or may be affected and hanged or become unavailable.

For example, it is assumed that the configuration information of the TRS is carried separately in two SIBs, such as the SIB-X and the SIB-Y. If the network device only issues the update (i.e. valuetag) for the SIB-X, then after receiving a system message notification the terminal device will continue to use the resources of the TRS indicated in the SIB-Y without being affected by the update for the SIB-X.

For example, it is assumed that the configuration information of the TRS is carried separately in two SIBs, such as the SIB-X and the SIB Y. If the network device only issues the update (i.e. valuetag) for the SIB-X, after the terminal device receives the system message notification, the terminal device suspends and does not use the resources of the TRS indicated in the SIB-Y, and the terminal device does not use the resources of the TRS indicated in the SIB-Y until an updated SIB-X is obtained. For example, after the system information is updated, the terminal device obtains the updated TRS configuration information and then waits for the network device to send an availability indication of the TRS.

In embodiments of the disclosure, the transmission of the target system information in segments may avoid that the target system information cannot be carried in one SIB for transmission due to an excessive amount of data, and may improve a transmission reliability of the target system information.

Based on the same concept, embodiments of the disclosure provide a method for transmitting system information, which may be performed by the terminal device of the above communication system.

FIG. 3 is a flowchart illustrating a method for transmitting system information performed by a terminal device side according to embodiments of the disclosure. As illustrated in FIG. 3, the method may include the following.

At S301, a terminal device obtains at least one segment from a network device.

The at least one segment is associated the target system information.

It is understandable that the network device sends the segment(s) of the target system information to the terminal through the above S201 to S202, and the terminal device receives the at least one segment, and these segment(s) may be all or part segments of the target system information.

In some embodiments, the target system information includes configuration information of a TRS/CSI-RS.

At S302, the terminal device obtains the target system information based on the at least one segment.

In some embodiments, the network device carries the segment(s) of the target system information in SIB(s) or SIB-segment(s) for sending, where one segment is carried in one SIB or one SIB-segment. Therefore, the terminal device may first receive at least one SIB or SIB-segment, and then obtain the target system information based on the segment(s) carried in these SIB(s) or SIB-segment(s).

For example, different segments may be carried in different SIBs, such as SIB-X, SIB-Y, SIB-Z, SIB-21, SIB-22, SIB23, etc. Or, different segments may be carried in different SIB-segments, such as SIB-segmentX, SIB-segmentY, SIB-segmentZ, etc. Here, X, Y, Z, 21, 22, and 23 are serial numbers of SIBs or SIB-segments.

In some embodiments, the order of the plurality of segments of the target system information is consistent with the order of SIBs or SIB-segments. The network device may send the plurality of segments sequentially in the order of SIBs or SIB-segments. For example, the system information is divided into a segment 1, a segment 2, and a segment 3. The network device may send the segment 1, the segment 2, and the segment 3 sequentially in the order of SIB-21, SIB-22, and SIB23. Or the network device may send the segment 1, the segment 2, and the segment 3 sequentially in the order of SIB-X, SIB-Y, and SIB-Z (X<Y<Z).

In an embodiment, when there are a plurality of SIBs or SIB-segments, the terminal device may first combine the plurality of SIBs or SIB-segments together, and then parse the combined SIBs or SIB-segments to obtain the target system information, thereby reducing the number of times of parsing the information, simplifying the processing process, shortening the processing time, and improving the efficiency of obtaining the target system information.

In another embodiment, when there are a plurality of SIBs or SIB-segments, the terminal device may first parse each SIB or SIB-segment to obtain a plurality of subgroups carried in the SIBs or the SIB-segments, and then combine the plurality of subgroup to obtain the target system information, thereby accurately obtaining each segment, improving the success rate for obtaining the target system information, and improving the transmission reliability of the system information.

In some embodiments, every time when the terminal device receives an SIB or SIB-segment, the terminal device may parse the SIB or SIB-segment to obtain a corresponding segment. Or the terminal device may first save the received SIB or SIB-segment, and after receiving the plurality of SIBs or SIB-segments, the terminal device may parse the plurality of SIBs or SIB-segments one by one to obtain corresponding segments.

In some embodiments, before sending the segment(s), the network device may indicate segment information of the target system information to the terminal device. Therefore, the above method also includes: receiving, by the terminal device, segment indication information from the network device, in which the segment indication information is configured to indicate segment information of the target system information.

Here, the segment information of the target system information may include a segment number and a segment type of the plurality of segments. The segment number is used to indicate which segment of the target system information a current segment is, and the segment type is used to indicate whether the current segment is a last one of segments of the target system information. A value of the segment number may be an integer such as 0, 1, 2, 3, etc.; and a value of the segment type may be 0 or 1.

For example, the segment number (segmentNumber) and the segment type (segmentType) may be represented as follows:

| | |
|---|---|
| segmentNumber-r17 | INTEGER (0..1), |
| segmentType-r17 | ENUMERATED {notLastSegment, lastSegment}, |

If the segment information of the current segment is (0, 0), it means that the current segment is a first one of segments of the target system information but not a last one of segments. If the segment information of the current segment is (0, 1), it means that the current segment is the first one of segments of the target system information and is the last one. If the segment information of the current segment is (1, 1), it means that the current segment is a second one of segments of the target system information and is the last one. Here, (1, 0) may be reserved and not be used.

Certainly, the above segment number and the segment type may also be coded jointly. For example, a codepoint 00 means the first one of segments but not the last one of segments. A codepoint 01 means the first one of segments and the last one of segments. A codepoint 11 means that the second one of segments is the last one.

Certainly, the terminal device may also determine the segment information of the target system information based on the protocol provision of the 3GPP, and embodiments of the disclosure do not specifically limit this.

Further, if the segment information of the current segment received by the terminal device is (0, 0), the terminal device first saves the current segment and continues to wait for a next segment. If the segment information of the current segment received by the terminal device is (0, 1), the terminal device first saves the current segment and obtains the target system information based on the current segment. If the current segment information received by the terminal device is (1, 1), the terminal device determines whether a previous segment has been received, and if the previous segment has been received, the terminal device obtains the target system information based on the previous segment and the current segment.

In some embodiments, the terminal device may determine a segment combination manner of the target system information based on a configuration of the network device or based on the protocol provision of the 3GPP, such that the terminal device may obtain the target system information based on different segment combination manners. Before the S301, the above method also includes: determining, by the terminal device, a segment combination manner of the target system information.

The segment combination manner includes a manner of combining all segments to form the target system information or a manner of combining a part of segments to form the target system information.

It is understandable that the terminal device may determine, based on the segment combination manner indicated by the network device or specified in the 3GPP protocol, whether to receive all segments of the target system information. If the segment combination manner indicated by the network device or specified in the protocol is the manner of combining all segments to form the target system information, the terminal device does not combine segments to form the target system information until all segments of the target system information are collected. Or, if the segment combination manner indicated by the network device or specified in the protocol is the manner of combining a part of segments to form the target system information, the terminal device does not need to wait for the collection of all segments of the target system information. Instead, after receiving a part of segments, the terminal device may combine these segments to obtain the target system information.

In some embodiments, the network device may indicate the segment combination manner of the target system information to the terminal device by sending indication information. For example, the network device may carry the indication information in the MIB or the SIB 1, or the network device may carry the indication information in feedback information for responding to an SIB request sent by the terminal device. Certainly, the network device may also carry the indication information in other higher layer signaling (such as a RRC signaling), which is not specifically limited in embodiments of the disclosure. In some examples, the SIB request message sent by the terminal device is carried in an Msg1, and the feedback information sent by the network device is carried in an Msg2. After receiving the above indication information, the terminal device determines the segment combination manner and combines at least one received segment together based on the segment combination manner for use.

In other possible embodiments, the network device may also indicate the segment combination manner of the target system information to the terminal device by sending scheduling information of all SIBs or SIB-segments related to the target system information. Therefore, the above method also includes: receiving, by the terminal device, scheduling information of a plurality of SIBs or SIB-segments from the network device; and combining, by the terminal device, the segments carried by the plurality of SIBs or SIB-segments to form the target system information.

It is understandable that the network device sends the scheduling information of the plurality of SIBs or SIB-segments to the terminal device, where the scheduling information of the plurality of SIBs or SIB-segments refers to the scheduling information of all SIBs or SIB-segments related to the target system information. That is to say, for the SIBs or SIB-segments that the network device sends the scheduling information to the terminal device, the terminal device needs to collect all of these SIBs or SIB-segments and combine the segments carried in these SIBs or SIB-segments to form the target system information. From this, it may be seen that the scheduling information of the plurality of SIBs or SIB-segments may not only indicate that the segment combination manner is the manner of combining all segments to form the target system information, but also indicate the segment information (such as the segment number, the segment type) of the target system information.

In an embodiment, when all segments of the target system information are carried by different SIBs (such as SIB-X, SIB-Y, SIB-Z, etc.), if the network device issues the scheduling information of all SIBs related to the target system information, then it implicitly expresses that the terminal device must receive these SIBs, which means all segments are combined to form the target system information. Therefore, after receiving all segments, the terminal device combines all segments together for use.

For example, it is assumed that the configuration information of the TRS is carried separately in two SIBs (such as SIB-X and SIB-Y). If the network device issues the scheduling information of the SIB-X and the SIB-Y, then it means that the target system information is formed by combining all segments. Therefore, the terminal device knows that it needs to receive the SIB-X and the SIB-Y (at this time, there are many contents of the TRS issued by the network device, and the configuration information of the TRS is transmitted in segments).

In some embodiments, in response to the terminal device determining to adopt the manner of combining all segments to form the target system information, the above method further includes: determining, by the terminal device, that a current segment is the last one of segments of the target system information. Correspondingly, the S302 may also include: combining, by the terminal device, at least one segment to form the target system information.

It is understandable that after the terminal device determines that the segment combination manner is the manner of combining all segments to form the target system information, the terminal device determines whether a currently received segment (i.e. the current segment) is the last one of segments of the target system information. When the currently received segment is the last one of segments of the target system information, the terminal device considers that all segments of the target system information have been received and then combines all received segments together for use. When the currently received segment is not the last one of segments, the terminal device considers that it has not received all segments of the target system information yet, then and the terminal device saves the current segment and continues to wait for receiving a next segment. In a practical application, the terminal device needs to make the above judgment for each received segment to determine whether all segments of the target system information have been received.

In some embodiments, the above judgment process may also use a first duration as a constraint. Therefore, the S302 may include: receiving, by the terminal device, at least one segment within a first duration (as described in above embodiments); determining, by the terminal device when the first duration expires, the at least one segment as all segments of the target system information and combining the at least one segment to form the target system information; or determining, by the terminal device when the first duration expires, that the at least one segment is not all segments of the target system information and discarding the at least one segment.

It is understandable that the terminal device determines the first duration based on an indication from the network device or a protocol provision of the 3GPP. Then, the terminal device receives the at least one segment within the first duration. When the first duration expires, the terminal device determines whether the at least one received segment is all segments of the target system information. If the at least one received segment is all segments, the terminal device combines all the received segments together for use. If the at least one received segment is not all segments, the terminal device considers that the system message has not been received and discards the at least one received segment.

In some embodiments, in response to the terminal device determining to adopt the manner of combining a part of segments to form the target system information, the S302 may include: receiving, by the terminal device, at least one segment within a first duration; and when the first duration expires, combining, by the terminal device, the at least one segment to form the target system information.

It is understandable that the terminal device determines the first duration based on an indication from the network device or a protocol provision of the 3GPP. Then, the terminal device receives the at least one segment within the first duration. When the first duration expires, the terminal may directly combine the at least one received segment together for use.

In embodiments of the disclosure, transmitting the target system information in segments may avoid that the target system information cannot be carried in one SIB for transmission due to an excessive amount of data, thereby improving the transmission reliability of the target system information.

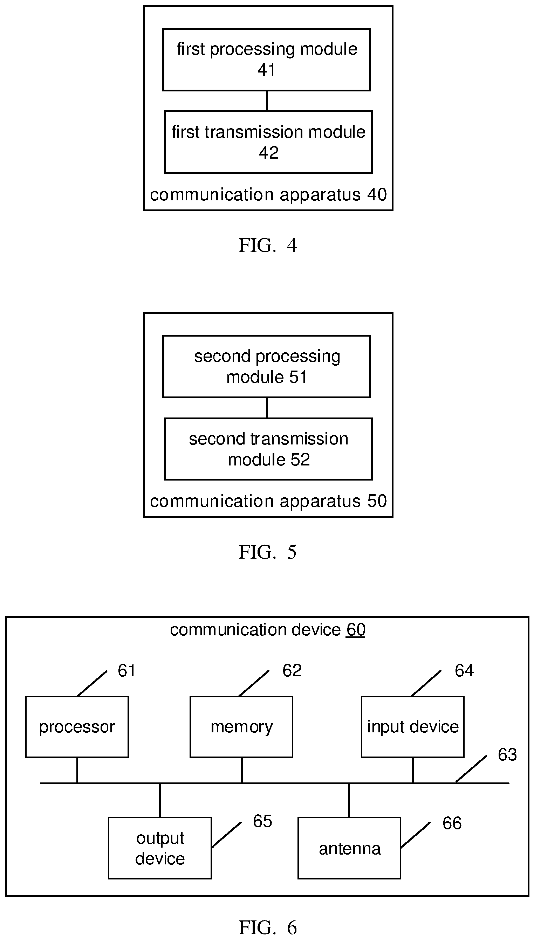

Based on the same concept, embodiments of the disclosure provide a communication apparatus. The communication apparatus may be a network device in a communication system or a chip or on-chip system in a network device. Or the communication apparatus may be a functional module, in a network device, for implementing the method of above embodiments. The communication apparatus may achieve functions executed by the network device in the above embodiments, and these functions may be implemented in a manner that a hardware executes a corresponding software. These hardware or software include one or more modules corresponding to the above functions. FIG. 4 is a schematic diagram illustrating a communication apparatus according to embodiments of the disclosure. As illustrated in FIG. 4, a communication apparatus 40 includes: a first processing module 41 configured to divide target system information into a plurality of segments; and a first transmission module 42 configured to send the plurality of segments to a terminal device.

In some embodiments, the target system information includes configuration information of a TRS/CSI-RS.

In some embodiments, the first transmission module 42 is configured to carry the plurality of segments in SIBs or SIB-segments for sending, in which one segment corresponds to one SIB or one SIB-segment.

In some embodiments, the first transmission module 42 is configured to sequentially send the plurality of segments in an order of SIBs or SIB-segments.

In some embodiments, the first transmission module 42 is further configured to send segment indication information to the terminal device, in which the segment indication information is configured to indicate segment information of the target system information.

In some embodiments, the first transmission module 42 is further configured to indicate a segment combination manner of the target system information to the terminal device, in which the segment combination manner includes a manner of combining all segments to form the target system information or a manner of combining a part of segments to form the target system information.

In some embodiments, the first transmission module 42 is further configured to send scheduling information of a plurality of SIBs or SIB-segments to the terminal device; in which the plurality of SIBs or SIB-segments carry a plurality of segments, and the scheduling information is used for instructing the terminal device to combine the plurality of segments to form the target system information.

In some embodiments, the first transmission module 42 is further configured to indicate a first duration to the terminal device, in which the first duration is an available duration for the terminal device to receive the segments of the target system information.

In some embodiments, the first processing module 41 is further configured to configure at least one value tag of at least one SIB for the terminal device, in which the at least one value tag is used for instructing the terminal device to update the at least one SIB.

In some embodiments, in response to the network device configuring value tags of a plurality of SIBs for the terminal device, the value tags of the plurality of SIBs are the same.

It is noteworthy that the specific implementation processes of the first processing module 41 and the first transmission module 42 may refer to a detailed description of the network device in the embodiments of FIG. 2 to FIG. 3, and will not be repeated here for a sake of brevity of the specification.

The first transmission module 42 mentioned in embodiments of the disclosure may be a receiving interface, a receiving circuit, or a receiver; and the first processing module 41 may be one or more processors.

Based on the same concept, embodiments of the disclosure provide a communication apparatus. The communication apparatus may be a terminal device in a communication system or a chip or on-chip system in a terminal device. Or the communication apparatus may be a functional module, in a terminal device, for implementing the method of the above embodiments. The communication device may achieve functions executed by the terminal device in the above embodiments, and these functions may be implemented in a manner that a hardware executes a corresponding software. These hardware or software include one or more modules corresponding to the above functions. FIG. 5 is a schematic diagram of another communication apparatus according to embodiments of the disclosure. As illustrated in FIG. 5, the communication apparatus 50 includes: a second transmission module 52 configured to obtain at least one segment from a network device, in which the at least one segment is associated with target system information; and a second processing module 51 configured to obtain the target system information based on the at least one segment.

In some embodiments, the target system information includes configuration information of a TRS/CSI-RS.

In some embodiments, the second transmission module 52 is configured to receive the at least one segment carried in SIB(s) or SIB-segment(s).

In some embodiments, an order of the at least one segment is consistent with an order of at least one SIB or SIB-segment.

In some embodiments, the second transmission module 52 is further configured to receive segment indication information from the network device, in which the segment indication information is configured to indicate segment information of the target system information.

In some embodiments, the second transmission module 52 is further configured to receive scheduling information of a plurality of SIBs or SIB-segments from the network device; and the second processing module 51 is further configured to combine the segments carried by the plurality of SIBs or SIB-segments to form the target system information.

In some embodiments, the second processing module 51 is further configured to determine a segment combination manner of the target system information, in which the segment combination manner includes a manner of combining all segments to form the target system information or a manner of combining a part of segments to form the target system information.

In some embodiments, the second processing module 51 is further configured to determine, in response to the second processing module determining to adopt the manner of combining all segments to form the target system information, that a current segment is a last one of segments of the target system information and combine the at least one segment to form the target system information.

In some embodiments, the second processing module 51 is further configured to determine, in response to the second processing module determining to adopt the manner of combining all segments to form the target system information, that the current segment is not the last one of segments of the target system information; save the current segment and wait to receive a next segment.

In some embodiments, the second processing module 51 is further configured to receive, in response to the second processing module determining to adopt the manner of combining all segments to form the target system information, at least one segment within a first duration, in which the first duration is an available duration for the terminal device to receive the segments of the target system information; and determine, when the first duration expires, that the at least one segment is all segments of the target system information, and combine the at least one segment to form the target system information.

Furthermore, the second processing module is further configured to determine, when the first duration expires, that the at least one segment is not all segments of the target system information and discard the at least one segment.

In some embodiments, the second transmission module 52 is further configured to receive, in response to the second processing module determining to adopt the manner of combining a part of segments to form the target system information, at least one segment within a first duration, in which the first duration is an available duration for the terminal device to receive the segments of the target system information; and combine, when the first duration expires, the at least one segment to form the target system information.

It is noteworthy that specific implementation processes of the second processing module 51 and the second transmission module 52 may refer to a detailed description of the network device in the embodiments of FIG. 2 to FIG. 3, and will not be repeated here for a sake of brevity of the specification.

The second transmission module 52 mentioned in embodiments of the disclosure may be a receiving interface, a receiving circuit, or a receiver; and the second processing module 51 may be one or more processors.

Based on the same concept, embodiments of the disclosure provide a communication device. The communication device may be the terminal device or the network device described in one or more of the above embodiments. FIG. 6 is a schematic diagram illustrating a communication device according to embodiments of the disclosure. As illustrated in FIG. 6, the communication device 60 adopts a general computer hardware, including a processor 61, a memory 62, a bus 63, an input device 64, and an output device 65.

In some embodiments, the memory 62 may include a computer storage media in a form of volatile and/or non-volatile memory, such as a read-only memory and/or a random access memory. The memory 62 may store an operating system, an application program, other program modules, an executable code, a program data, a user data, etc.

The input device 64 may be configured to input a command and an information to the communication device, for example, the input device 64 is a keyboard or a pointing device, such as a mice, a trackball, a touchpad, a microphone, a joystick, a game mat, a satellite TV antenna, a scanner, or similar devices. These input devices may be connected to the processor 61 through the bus 63.

The output device 65 may be configured to output an information for the communication device. In addition to a monitor, the output device 65 may also be other peripheral output devices, such as a speaker and/or a printing device, and these output devices may also be connected to the processor 61 through the bus 63.

The communication device may be connected to a network, such as a local area network (LAN), through an antenna 66. In a networked environment, computer executable instructions stored in a control device may be stored in a remote storage device, not limited to local storage.

When the processor 61 in the communication device executes an executable code or a application program stored in the memory 62, the communication device executes the communication method of a terminal device side or a network device side according to the above embodiments. A specific execution process is described in the above embodiments and will not be repeated here.

In addition, the above memory 62 stores computer executable instructions for implementing functions of the first processing module 41 and the first transmission module 42 in FIG. 4. The function/implementation processes of the first processing module 41 and the first transmission module 42 in FIG. 4 may be achieved by the processor 61 in FIG. 6 calling the computer executable instructions stored in the memory 62. The specific implementation process and the function refer to the relevant embodiments above.

Alternatively, the above memory 62 stores computer executable instructions for implementing functions of the second processing module 51 and the second transmission module 52 in FIG. 5. The function/implementation process of the second processing module 51 and the second transmission module 52 in FIG. 5 may be achieved by the processor 61 in FIG. 6 calling the computer executable instructions stored in the memory 62. The specific implementation process and the function refer to the relevant embodiments above.

Based on the same concept, embodiments of the disclosure provide a terminal device that is consistent with the terminal device in one or more of the above embodiments. Optionally, the terminal device may include a mobile phone, a computer, a digital broadcasting terminal device, a message transceiver device, a game console, a tablet device, a medical device, a fitness device, a personal digital assistant, etc.

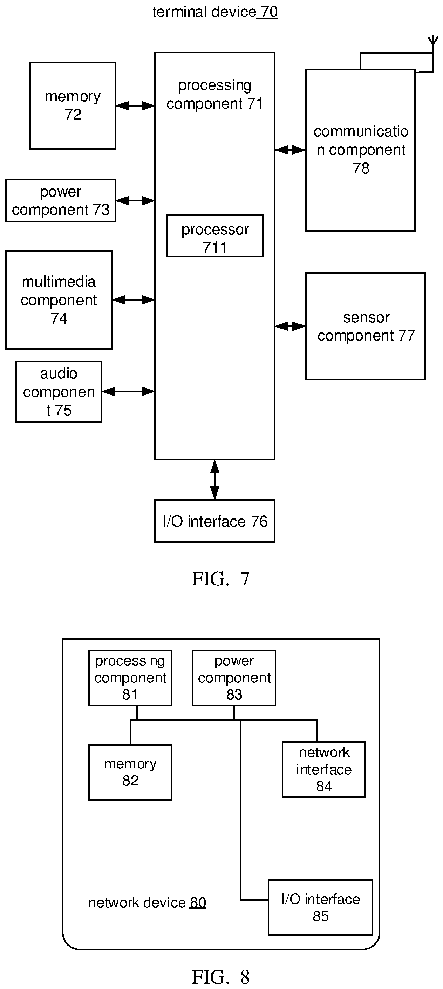

FIG. 7 is a schematic diagram illustrating a terminal device according to embodiments of the disclosure. As illustrated in FIG. 7, a terminal device 70 may include one or more of following components: a processing component 71, a memory 72, a power component 73, a multimedia component 74, an audio component 75, an input/output (I/O) interface 76, a sensor component 77 and a communication component 78.

The processing component 71 typically controls the overall operation of the terminal device 70, such as operations associated with display, telephone calls, data communication, camera operations, and recording operations. The processing component 71 may include one or more processors 711 to execute instructions to complete all or part of the steps of the above methods. In addition, the processing component 71 may include one or more modules to facilitate the interaction between the processing component 71 and other components. For example, the processing component 71 may include a multimedia module to facilitate interaction between the multimedia component 74 and the processing component 71.

The memory 72 is configured to store various types of data to support operations on the terminal device 70. Examples of these data include instructions for any application program or method operated on the terminal device 70, contact data, phone book data, messages, images, videos, etc. The memory 72 may be implemented by any type of volatile or non-volatile storage apparatus or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disc.

The power component 73 provides power to various components of the terminal device 70. The power component 73 may include a power management system, at least one power supply, and other components associated with generating, managing, and distributing power for the terminal device 70.

The multimedia component 74 includes a screen providing an output interface between the terminal device 70 and a user. In some embodiments, the screen may include a liquid crystal display (LCD) and a touch panel (TP). If the screen includes the touch panel, the screen may be implemented as a touch screen to receive input signals from the user. The touch panel includes at least one touch sensor to sense touches, slides and gestures on the touch panel. The touch sensor may not only sense the boundaries of the touch or slide action, but also detect the wake-up time and pressure associated with the touch or slide operation. In some embodiments, the multimedia component 74 includes a front-facing camera and/or a rear-facing camera. The front-facing camera and/or the rear-facing camera may receive external multimedia data when the terminal device 70 is in an operating mode, such as a shooting mode or a video mode. Each front-facing camera and rear-facing camera may be a fixed optical lens system or have a focal length and an optical zoom capability.

The audio component 75 is configured to output and/or input audio signals. For example, the audio component 75 includes a microphone (MIC) that is configured to receive external audio signals when the terminal device 70 is in the operating mode, such as a call mode, a recording mode, and a speech recognition mode. The received audio signals may be further stored in the memory 72 or transmitted through the communication component 78. In some embodiments, the audio component 75 further includes a speaker for outputting the audio signals.

The Input/output (I/O) interface 76 provides an interface between the processing component 71 and a peripheral interface module. The peripheral interface module may be a keypad, a click wheel, a button, and the like. These buttons may include, but are not limited to, a home button, a volume button, a start button, and a lock button.

The sensor component 77 includes at least one sensor for providing state assessments of various aspects for the terminal device 70. For example, the sensor component 77 may detect the on/off state of the terminal device 70, the relative positioning of components, such as a display and a keypad of the terminal device 70. The sensor component 77 may also detect the position change of the terminal device 70 or a component of the terminal device 70, the presence or absence of user contact with the terminal device 70, the orientation or acceleration/deceleration of the terminal device 70 and the temperature change of the terminal device 70. The sensor component 77 may include a proximity sensor configured to detect the presence of a nearby object without any physical contact. The sensor component 77 may also include an optical sensor, such as a CMOS or CCD image sensor, for use in imaging applications. In some embodiments, the sensor component 77 may also include an acceleration sensor, a gyroscope sensor, a magnetic sensor, a pressure sensor, or a temperature sensor.

The communication component 78 is configured to facilitate wired or wireless communication between the terminal device 70 and other apparatuses. The terminal device 70 may access to a wireless network based on a communication standard, such as Wi-Fi, 2G, 3G, 4G, or 5G, or a combination thereof. In an embodiment, the communication component 78 receives broadcast signals or broadcast-related information from an external broadcast management system via a broadcast channel. In an embodiment, the communication component 78 further includes a near field communication (NFC) module to facilitate short range communication. For example, NFC modules may be implemented based on Radio Frequency Identification (RFID) technology, Infrared Data Association (IrDA) technology, Ultra Wide Band (UWB) technology, Bluetooth (BT) technology and other technologies.

In an embodiment, the terminal device 70 may be implemented by at least one application specific integrated circuit (ASIC), digital signal processor (DSP), digital signal processing device (DSPD), programmable logic device (PLD), field programmable gate array (FPGA), controller, microcontroller, microprocessor, or another electronic element, for executing the above methods.

Based on the same concept, embodiments of the disclosure provide a network device that is consistent with the network device in one or more of the above embodiments.

Fig. 8 is a schematic diagram illustrating a network device according to embodiments of the disclosure. As illustrated in FIG. 8, a network device 80 may include a processing component 81, which further includes one or more processors, and a memory resource, represented by a memory 82, for storing instructions, such as an application program, that may be executed by the processing component 81. The application program stored in the memory 82 may include one or more modules each corresponding to a set of instructions. In addition, the processing component 81 is configured to execute the instructions to execute any of the methods previously applied to the network device.

The network device 80 may also include a power component 83 configured to execute a power management for the network device 80, a wired or wireless network interface 84 configured to connect the network device 80 to the network, and an input/output (I/O) interface 85. The network device 80 may operate using an operating system stored in the memory 82, such as Windows Server TM, Mac OS XTM, UnixTM, LinuxTM, FreeBSDTM, or similar.

Based on the same concept, embodiments of the disclosure further provide a computer-readable storage medium having instructions stored thereon; the instructions are running on a computer, in order to execute the methods for transmitting system information on the terminal device side or the network device side according to one or more of the above embodiments.

Based on the same concept, embodiments of the disclosure further provide a computer program or a computer program product that, when executed on a computer, enables the computer to perform the methods for transmitting system information on the terminal device side or the network device side according to one or more of the above embodiments.

Other embodiments of the disclosure will easily occur to those skilled in the art after considering the specification and practicing the disclosure disclosed herein. The disclosure is intended to cover any variations, uses or adaptations of the disclosure, which follow the general principles of the disclosure and include common sense or common technical means in this technical field that are not disclosed in the disclosure. The specification and embodiments are only considered illustrative, and the true scope and spirit of the disclosure are indicated by the following claims.

It is understandable that the disclosure is not limited to the precise structures described above and shown in the drawings, and various modifications and changes may be made without departing from its scope. The scope of the disclosure is limited only by the scope of the appended claims.

## Claims

1. A method for transmitting system information, comprising:
dividing, by a network device, target system information into a plurality of segments; and
sending, by the network device, the plurality of segments to a terminal device.

2. The method of claim 1, wherein the target system information comprises configuration information of a tracking/channel state information-reference signal (TRS/CSI-RS).

3. The method of claim 1, wherein sending, by the network device, the plurality of segments to the terminal device comprises:
carrying, by the network device, the plurality of segments in system information block segments (SIB-segments) or system information blocks (SIBs) for sending, wherein one segment corresponds to one SIB-segment or one SIB.

4. The method of claim 3, wherein carrying, by the network device, the plurality of segments in the SIBs or the SIB-segments for sending comprises:
sending sequentially, by the network device, the plurality of segments in an order of SIB-segments or SIBs.

5. The method of claim 1, further comprising:
sending, by the network device, segment indication information to the terminal device, wherein the segment indication information is configured to indicate segment information of the target system information.

6. The method of claim 1, further comprising:
indicating, by the network device, a segment combination manner of the target system information to the terminal device, wherein the segment combination manner comprises a manner of combining all segments to form the target system information or a manner of combining a part of segments to form the target system information.

7. The method of claim 1, further comprising:
sending, by the network device, scheduling information of a plurality of system information block segments (SIB-segments) or system information blocks (SIBs) to the terminal device; wherein the plurality of SIB-segments or SIBs carry the plurality of segments, and the scheduling information is used for instructing the terminal device to combine the plurality of segments to form the target system information.

8. The method of claim 1, further comprising:
indicating, by the network device, a first duration to the terminal device, wherein the first duration is an available duration for the terminal device to receive the segments of the target system information.

9. The method of claim 1, further comprising:
configuring, by the network device, at least one value tag of at least one system information block (SIB) for the terminal device, wherein the at least one value tag is used for instructing the terminal device to update the at least one SIB.

10. The method of claim 9, wherein, in response to configuring, by the network device, value tags of a plurality of SIBs for the terminal device, the value tags of the plurality of SIBs are the same.

11. A method for transmitting system information, comprising:
obtaining, by a terminal device, at least one segment from a network device, wherein the at least one segment is associated with target system information; and
obtaining, by the terminal device, the target system information based on the at least one segment.

12. The method of claim 11, wherein the target system information comprises configuration information of a tracking/channel state information-reference signal (TRS/CSI-RS).

13. The method of claim 11, wherein obtaining, by the terminal device, the at least one segment from the network device comprises:
receiving, by the terminal device, at least one segment carried in at least one system information block segment (SIB-segment) or at least one system information block (SIB), wherein one segment corresponds to one SIB-segment or one SIB.

14. The method of claim 13, wherein an order of the at least one segment is consistent with an order of the at least one SIB-segment or SIB.

15. The method of claim 11, further comprising:
receiving, by the terminal device, segment indication information from the network device, wherein the segment indication information is configured to indicate segment information of the target system information.

16. The method of claim 11, further comprising:
receiving, by the terminal device, scheduling information of a plurality of system information block segments (SIB-segments) or system information blocks (SIBs) from the network device; and
combining, by the terminal device, segments carried by the plurality of SIB-segments or SIBs to form the target system information.

17. The method of claim 11, further comprising:
determining, by the terminal device, a segment combination manner of the target system information, wherein the segment combination manner comprises a manner of combining all segments to form the target system information or a manner of combining a part of segments to form the target system information.

18. The method of claim 17, wherein, in response to the terminal device determining to adopt the manner of combining all segments to form the target system information, the method further comprises: determining, by the terminal device, that a current segment is a last one of segments of the target system information; and wherein obtaining, by the terminal device, the target system information based on the at least one segment comprises: combining, by the terminal device, the at least one segment to form the target system information.

19. The method of claim 17, further comprising:
determining, by the terminal device, that a current segment is not the last one of segments of the target system information; and
saving, by the terminal device, the current segment and waiting to receive a next segment.

20. The method of claim 17, wherein, in response to the terminal device determining to adopt the manner of combining all segments to form the target system information, obtaining, by the terminal device, the target system information based on the at least one segment comprises:
receiving, by the terminal device, the at least one segment within a first duration, wherein the first duration is an available duration for the terminal device to receive segments of the target system information; and
in response to the first duration expiring, determining, by the terminal device, that the at least one segment is all segments of the target system information, and combining the at least one segment to form the target system information.

21. The method of claim 20, further comprising:
in response to the first duration expiring, determining, by the terminal device, that the at least one segment is not all segments of the target system information, and discarding the at least one segment.

22. The method of claim 17, wherein, in response to the terminal device determining to adopt the manner of combining a part of segments to form the target system information, obtaining, by the terminal device, the target system information based on the at least one segment comprises:
receiving, by the terminal device, the at least one segment within a first duration, wherein the first duration is an available duration for the terminal device to receive segments of the target system information; and
in response to the first duration expiring, combining, by the terminal device, the at least one segment to form the target system information.

23. A communication apparatus, comprising:
a first processing module, configured to divide target system information into a plurality of segments; and
a first transmission module, configured to send the plurality of segments to a terminal device.

24. A communication apparatus, comprising:
a second transmission module, configured to obtain at least one segment from a network device, wherein the at least one segment is associated with target system information; and
a second processing module, configured to obtain the target system information based on the at least one segment.

25. A communication device, comprising:
an antenna;
a memory; and
a processor, connected to the antenna and the memory respectively and configured to execute computer executable instructions stored on the memory to control a transmission and a reception of the antenna, and being able to perform the method for transmitting system information of any one of claims 1 to 10 or claims 11 to 22.

26. A computer storage medium, having computer executable instructions stored thereon, wherein when the instructions are executed by a processor, the method for transmitting system information of any one of claims 1 to 10 or claims 11 to 22 is performed.
